Europäisches Patentamt

(19) European Patent Office (11) Publication number: **0 051 283**

Office européen des brevets **B2**

(12) **NEW EUROPEAN PATENT SPECIFICATION**

(45) Date of publication of the new patent specification: (51) Int. Cl.⁴: **G 11 B 7/24, G 11 B 7/26**
**31.05.89**

(21) Application number: **81109247.7**

(22) Date of filling: **29.10.81**

(54) **Optical recording medium and method for its formation.**

(30) Priority: **31.10.80 US 202842**

(43) Date of publication of application:
**12.05.82 Bulletin 82/19**

(45) Publication of the grant of the patent:
**03.07.85 Bulletin 85/27**

(45) Mention of the opposition decision:
**31.05.89 Bulletin 89/22**

(84) Designated Contracting States:
**AT BE CH DE FR GB IT LI LU NL SE**

(56) References cited:
**EP-A-0 022 313**
**DE-A-2 826 122**
**DE-C-1 597 332**
**FR-A-1 593 710**
**FR-A-2 368 779**
**GB-A-2 005 457**
**US-A-4 032 691**
**US-A-4 097 895**

**IBM TECHNICAL DISCLOSURE BULLETIN vol. 15,
no. 11, April 1975, ARMONK N.Y. (US) A.H.
NETHERCOT et al.: "Enchancing the temperature
rise of beam addressable memory materials" pages
3305-3306
CA, Index Guide 1985, pp. 19G, 64G, 667G
IBM TOB Vol. 22 No. 5 p. 2076
Organic Chemistry (Morrison and Boyd), Allyn and
Bacon Inc, Boston, 12th printing, p. 798
Methoden in der organischen Chemie, Houben-**

(73) Proprietor: **DISCOVISION ASSOCIATES, 3300
Hyland Avenue, Costa Mesa California 92626 (US)**

(72) Inventor: **Wilkinson, Richard L., 21341 Avenida
Manantial, El Toro California 92630 (US)**
Inventor: **Michalchik, Michael, 1970 Port Laurent
Place, Newport Beach California 92660 (US)**

(74) Representative: **Patentanwälte Grünecker,
Kinkeldey, Stockmair & Partner,
Maximilianstrasse 58, D-8000 München 22 (DE)**

(56) References cited: (continuation)
**Weyl, 4th printing (1965) part 10.1, pp. 482, 484**

EP 0 051 283 B2

## Description

This invention relates generally to information recording media, and, more particularly, to recording media of the type in which information can be both recorded and read using optical techniques.

Recording media of this particular type typically include a disc-shaped substrate having a smooth, annular surface with a thin recording layer overlying it. Such media are especially adapted for use both as recording masters and as single recording discs. In both cases, an information signal is typically recorded on the disc by a thermal process in which an intensity-modulated writing beam of light is focused onto the recording layer, as the disc is rotated in a prescribed fashion. This produces a succession of spaced information-bearing pits forming a spiral recording track in the recording layer.

One medium as disclosed in EA-Al-22 313, which is state of the art in accordance with Art 54(3) EPC, includes a substrate having a smooth, planar upper surface, and overlying the surface is a thin light-absorbing coating that contains an explosive material. By scanning the medium with an intensity-modulated writing beam, the coating is selectively energized by the beam to induce spaced explosions in it, creating corresponding irregularities such as pits in the outer surface of the coating. In one embodiment, the light-absorbing coating includes a colorless explosive material, such as nitrocellulose, admixed with a suitable dye this absorptive of the writing beam.

From US-A-4 032 691 and DE-A-2 826 122 it is known to use a coating which comprises an azo dye provided with a nitro group.

Some recording medium embodiments substantially improve on prior recording media, because they all require writing beams having substantially reduced power levels and record signals with higher signal-to-nose ratios. However, they have not overcome all of the deficiencies of the prior recording media. Specifically, the preferred light-absorbing coating, i.e., a colorless explosive material in combination with a dye, does not necessarily completely chemically react with itself to form -on-condensable gases. Thus, non-gaseous residue material is deposited on both an objective lens for focusing the writing beam and surrounding portions of the recording medium. This has the harmful effect of both blocking out a portion of the intensity-modulated writing beam and reducing the signal-to-nose ratio of the recorded signal.

It will thus be appreciated that there is a need for a recording medium having a light-absorbing recording layer that will more-completely chemically react with itself when impinged by an intensty-modulated writing beam, to produce non-condensable gases, such that less non-gaseous residue material is deposited on an obective lens or on surrounding portions of the recording medium. The present invention fulfills this need.

Basically, the present invention is embodied in a recording medium for use with a recording apparatus of a type that scans the medium with a writing beam of light, modulated in intensity in accordance with an information signal to be recorded. The recording medium includes a substrate having a smooth upper surface, along with a thin light-absorbing recording layer overlying the surface. The recording layer includes an explosive material that is selectively heated by the writing beam, to induce spaced explosions in it and thereby yield corresponding pits representative of the information signal, and further a nitrated azo dye material. In accordance with the invention the nitrated dye material has a sufficient nitrate content such that substantially all of the products of the explosions are non-condensing gases. The explosions induced in it consume substantially the entire portion of the layer heated by the impinging writing beam, yielding primarily non condensable gases. Very little, if any, non-gaseous residue is therefore deposited on surrounding portions of the recording layer, and the signal-to-noise ratio of the recorded signal is thereby improved.

The reccording medium of the invention can be produced by first nitrating a prescribed amount of dye material and then dissolving the nitrated dye in a solvent to produce a solution of prescribed viscosity. The solution is then dispensed onto the surface of a substrate, and the substrate is spun at a prescribed angular velocity to evaporate the solvent and yield a thin, uniform nitrated dye recording layer.

In more detailed aspects of the invention, the step of nitrating includes a preliminary step of dissolving the dye in an alcohol, to produce a dye slurry. The nitrating step further includes steps of admixing a solution of nitric acid and sulphuric acid to the dye slurry, while cooling the mixture to prevent localized overheating caused by a chemical reaction between the dye and the acids. The reaction is quenched by adding water, which precipitates the nitrated dye. The nitrated dye is then purified and used in the step of dissolving.

Other aspects and advantages of the present invention will become apparent from the following description, taken in conjunction with the accompanying drawings, which illustrate, by way of example, the principles of the invention.

In the drawings:

Fig. 1 is a simplified block diagram of apparatus for recording an information signal on a recording disc of the present invention, and for recovering the signal from the disc to verify that it was properly recorded;

Fig. 2 is an enlarged plan view of a portion of the recording disc of Fig. 1. showing the arrangement of pits representative of the recorded information signal; and

Fig. 3 is a cross-sectional view (not to scale) of the recording disc of Fig. 1, showing two information-bearing pits formed in its special nitrated dye recording layer.

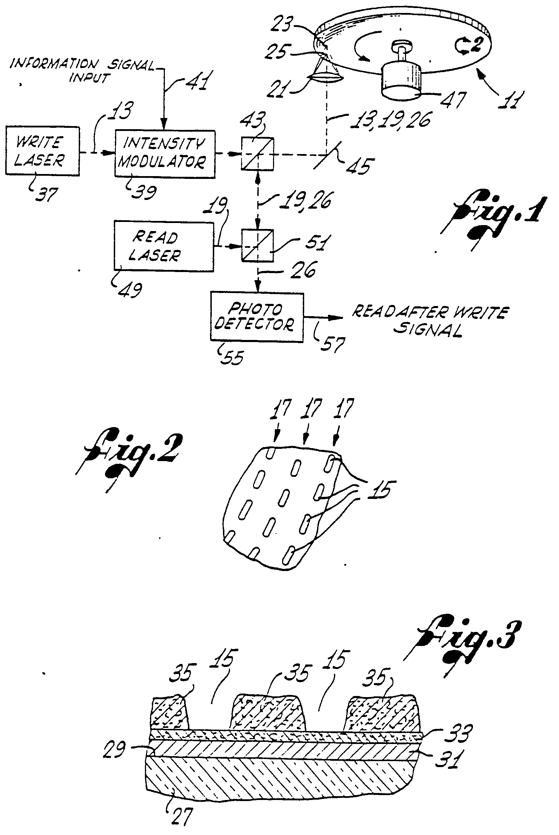

Referring now to the drawings, and particularly to Figs. 1 and 2, there is shown apparatus for recording an information signal on a rotatable recording disc 11. The apparatus operates to scan the disc with a writing beam of light 13 that is modulated in intensity in accordance with the information signal to be recorded. This forms a succession of microscopic information-bearing pits 15, arranged in a succession of substantially circular and concentric recording tracks 17.

The recording apparatus further operates to scan the disc 11 with a reading beam of light 19 having a uniform intensity that is substantially less than the peak intensity of the writing beam 13. The writing and reading beams, together, are focused onto the disc by an objective lens 21, to diffraction-limited spots 23 and 25, respectively. The reading beam trails the writing beam by a prescribed amount such that it scans the successive pits 15 immediately after they are formed by the writing beam. This yields a reflected read beam 26 that is modulated in intensity in accordance with the recorded pattern of pits. Detection of the reflected beam permits an evaluation to be made of the duty cycle of the recorded pattern of pits, and thereby a continuous control of both the power level and focus of the writing beam.

As shown in Fig. 3, the recording disc 11 includes a glass or plastic substrate 27 having a polished, planar surface 29 on its upper side. The surface is overlayed, successively, by a thin metallic layer 31 and a thin, transparent thermal barrier layer 33. Also, a special light-absorbing recording layer 35 overlies the thermal barrier layer. The writing beam of light 13 is transmitted through a medium of air adjacent the disc 11 and focused by the objective lens 21 to its diffraction-limited spot 23 on the outer surface of the recording layer.

In accordance with the invention, the special recording layer 35 includes a nitrated dye material that is highly absorptive of the intensity-modulated writing beam 13. Thus, as the disc 11 is rotated with respect to the beam, the recording layer is selectively heated by the beam, to induce spaced explosions in it and form corresponding microscopic pits 15 representative of the information signal. The successive explosions transform the exploded material into primarily non-condensable gases, whereby non-gaseous residue material is not deposited on the objective lens 21 or on surrounding portions of the recording layer. The signal-to-noise ratio of the recorded signal is thereby improved.

The metallic layer 31 overlying the polished surface 29 of the substrate 27 is included in the recording medium for two major purposes, first to improve the bonding of the overlying thermal barrier layer 33, and second to provide increased reflectivity of the reading beam of light 19, which scans the disc 11 immediately behind the writing beam 13. The metallic layer is preferably formed of a highly reflective material such as aluminum, and is vacuum deposited to a thickness of about 15 nm to 30 nm (150 to 300 Å).

The thermal barrier layer 33 overlying the metallic layer 31 is included primarily to reduce the conductance of heat from the impinging writing beam 13 outwardly by the underlying metallic layer, a phenomenon that otherwise could form an undercut region in the side wall of each pit 15. Also, the metallic layer and barrier layer, together, protect the underlying substrate 27 from damage caused by a solvent used in depositing the overlying recording layer 35. The thermal barrier layer is preferably composed of an inorganic dielectric material such as silicon monoxide, calcium fluoride, or magnesium fluoride, and preferably has a thickness of about 30 nm (300 Å). It can be formed conveniently by vacuum depositing it directly onto the metallic layer, immediately after formation of the metallic layer, without removing the substrate from the vacuum chamber.

The metallic layer 31 can alternatively be formed of a metal having a lower reflectivity, such as titanium, but the intensity of the reading beam 19 must then be increased to provide a reflected beam 26 of sufficient intensity to be properly detected. Use of metals having relatively low reflectivity can sometimes obviate the need for the overlying thermal barrier layer 33 since heat from the impinging writing beam 12 then is not readily conducted outwardly.

The nitrated dye material included in the light-absorbing recording layer 35 is a substance that will explode or undergo a rapid chemical reaction to produce gases whenever heated to its autoignition temperature. The nitrated dye preferably has a low thermal conductivity, so that only the portions of the coating on which the intensity-modulated writing beam 13 actually impinges are heated to the critical temperature. Nitrated dye materials generally have higher indices of refraction than recording materials such as nitro-cellulose used in the past, thereby enhancing the readability of the recorded signal.

In the embodiment of the recording apparatus of Fig. 1, the writing beam 13 is produced by a conventional argon ion laser and includes components at about 457, 488, and 514 nanometers (nm). Accordingly, to be heated by the intensity-modulated writing beam, the recording layer 35 must be absorptive of these wavelengths. The reading beam 19 of Fig. 1 is produced by a conventional helium neon laser and has a wavelength of about 633 nm. Since it is desired that the reading beam be highly reflected by the recording disc 11, the recording layer is preferably non-absorptive at this wavelength.

In selecting a nitrated dye to include in the recording layer, it is desirable to select a material derived from a dye that is initially highly absorptive at the wavelengths of the writing beam 13 and highly non-absorptive at the wavelength of beam splitter 43 to a mirror 45, and in turn to the objective lens 21 which focuses it to the diffraction-limited spot 23 on the recording layer 35 of the disc 11. The disc is rotated at a prescribed angular velocity by a spindle motor 47, and the mirror and the objective lens are mounted on a carriage (not shown) that is movable radially relative to the disc, so that the information signal is recorded in the succession of substantially circular and concentric recording tracks 17 (Fig. 2).

The reading beam of light 19, which is utilized in reading the information signal immediately after it has been recorded on the disc 11, is produced by a read laser 49, preferably a helium neon laser. The beam has a constant intensity, substantially less than that of the writing beam 13. The reading beam 19 is initially directed through a second beam splitter 51 to the first beam splitter 43, where it is reflected and combined with the writing beam 13. Thereafter, it follows essentially the same path as the writing beam until it is focused to its diffraction-limited spot 25 on the recording layer 35 of the disc 11. The two beams are aligned such that their respective points of impingements 23 and 25 on the disc are approximately 5 microns apart, with the disc positioned such that the spots are on a common radius, and with the disc rotating such that the writing beam scans a given point on that radius immediately prior to the reading beam.

The reading beam of light 19 has a constant intensity substantially lower than that of the writing beam 13. Also, the nitrated dye recording layer 35 is relatively non-absorptive of the reading beam, so its physical structure is not affected by the reading beam. When the reading beam impringes on portions of the disc 11 not occupied by a pit, it is transmitted through the recording layer and thermal barrier layer 33, and reflected by the underlying metallic layer 31 back to the objective lens 21. When it is focused on a pit, on the other hand, it is again transmitted through the thermal barrier layer and reflected by the metallic layer, but due to the small size of the pit relative to the wavelength of the reading beam, the beam is diffracted or scattered by the pit and only a small proportion of it is collected by the objective lens. This is especially the case when a lens having a relatively low numerical aperture is utilized. Thus, the reflected beam 26, collected by the objective lens, is modulated in intensity by the recorded pattern of pits.

The reflected ream beam 26 collected by the objective lens 21 is transmitted from the lens via the mirror 45 to the first beam splitter 43, where it is reflected and transmitted to the second beam splitter 51. From there, the reflected beam is transmitted to a photodetector 55, which detects the beam and produces a corresponding readafter-write electrical signal. This signal is supplied over line 57 to appropriate circuitry (not shown) for continuously controlling both the power level and the focus of the writing beam 13, whereby the information signal can be properly recorded over the reading beam 19. It is expected that the nitrating process will produce a material having light absorption characteristics substantially similar to those of the original dye. Similarly, it is desirable that the dye have a relatively low melting point or decomposition temperature, whereby, after nitrating, it is likely that the nitrated dye material will likewise have a low melting point or decomposition temperature and thus require less heat to bring it to its critical temperature.

Using this criteria, two azo dyes believed particularly suitable for nitrating to produce the recording layer 35 of the invention are a dye sold by the American color and chemical co. under the trademark AMAPLAST SCARLET MM, and a dye sold by BASF Wyandotte corp. under the trademark NEOZAPON FIERY RED BL. The AMAPLAST SCARLET MM dye has a broad melting point of about 157 to 159°C, and after nitrating this melting point is believed to drop to about 100°C. The NEOZAPON dye has a gradual decomposition temperature of about 200°C, and the nitrating process s believed to lower this temperature by about 20 to 40°C.

Other suitable azo dyes which are identified by their trademarks include:

1) PARA RED (1-(p-nitrophenylazo)-2-naphtol) having a light absorption peak at about 8 nm and a melting point of about 248 to 252°C,

2) ACID ORANGE having a light absorption peak at about 490 nm,

3) ZINCON having a light absorption peak at about 490 nm and a decomposition temperature of about 203°C,

4) TOLUIDENE RED having relatively high light absorption at 488 to 507 nm and a melting point of about 270 to 272°C,

5) ACID ORANGE 10,

6) METHYL RED HYDROCHLORIDE having a light absorption peak at about 493 nm and having a decompositon temperature of about 175°C,

7) BIEBRICK SCARLET having a light absorption peak at about 505 nm,

8) SUDAN II having a light absorption peak at about 493 nm and a melting point of about 156 to 158°C.

All of these dyes are marketed by Aldrich Chemical Co. of Milwaukee, Wisconsin.

With reference again to Fig. 1, the apparatus for recording the information signal on the disc 11 will now be described in greater detail. The writing beam of light 13 is produced by a write laser 37, preferably an argon ion laser, and this constant-intensity beam is transmitted to an intensity modulator 39, which modulates the intensity of the beam in accordance with the information signal supplied over line 41. The modulator can conveniently comprise either a Pockels cell or an acoustic modulator. The intensity of the modulated beam is alternately greater than and less than a threshold at which the nitrated dye material in the special recording layer 35 will reach its auto-ignition temperature, so a corresponding pattern of pits 15 is formed in the disc.

The intensity-modulated writing beam 13 is transmitted from the modulator 39 through a first the entire surface of the disc 11.

The nitrated dye material included in the recording layer 35 is formed in a special process in which an azo dye is first dissolved in an alcohol such as ethanol to produce a dye slurry, after which a solution of nitric acid and sulphuric avid is admixed to the slurry. Preferably, the acid solution is a 10 molar solution, with a 2 : 1 ratio of nitric acid to sulphuric acid, although this ratio could be reduced to 1 : 1 with satisfactory results. The sulphuric acid is included primarily to draw out water produced in the chemical reaction between the dye and the nitric acid. The mixture is continuously stirred and cooled under tap water as the acid solution is added, to control the chemical reaction and prevent localized overheating. When an excess of nitric acid is present, out-gassing from a reaction between the nitric acid and the alcohol occurs, at which time the dye reaction is quenched by adding deionized water. This precipitates the nitrated dye, which is then purified. A surprising result of this process is, while using an azo dye as known by the trademark AMAPLAST-SCARLET MM, that the nitrated dye material is a polymer, which facilitates the subsequent formation of the thin nitrated dye recording layer.

The special nitrated dye recording layer 35 is deposited on the upper surface of the thermal barrier layer 33 using a special process in which the nitrated dye is first dissolved in a suitable solvent and then dispensed onto the surface, after which the substrate is rotated at a prescribed angular velocity, to evaporate the solvent and yield the thin, uniform nitrated dye recording layer. In the preferred process, about 15 grams of nitrated dye are added to about one liter of the solvent Cellosolve (Registered trademark) acetate, to yield a solution having a viscosity in the range of about 1 - 2 centipoise. In forming solutions from other nitrated dye materials, different proportions will likely be required, since the molecular weights of the materials are ordinarily different from that of the nitrated dye. Other suitable solvents include bury acetate and amyl acetate, ethyl acetate, and carbytol acetate.

The liquid solution is then poured onto the upper surface of the thermal barrier layer 33, and the substrate 27 and integral metallic layer 31 and barrier layer 33 are then spun at an angular velocity of about 500 - 1000 rpm until the solution has achieved a substantially uniform thickness over the entire surface. Continued spinning at this velocity for about 20 to 30 seconds evaporates the solvent completely, leaving the recording layer 35 in the form of a solid film bonded to the upper surface of the barrier layer.

The thickness of the nitrated dye recording layer 35 can lie controlled by varying the viscosity of the solution and/or the spin speed. When the disc 11 is to be used subsequently as a recording master in the formation of polymethylmethacrylate disc replicas, the recording layer preferably has a final thickness of about 130 nm to 140 nm (1300 to 1400 Å). The pits 15 thereafter formed in the layer will have a corresponding depth, which corresponds to approximately 1/4 wavelength of a 633 nm reading beam used to recover the recorded signal from such replicas.

When the disc 11 is not to be used as a recording master, but rather merely as a single recording, the combined thickness of the recording layer 35 and the thermal barrier layer 33 is preferably about 210 nm (2100 Å). This corresponds to approximately 3/4 wavelength of the writing beam 13 and 1/2 wavelength of the reading beam 19. Because of interference effects, the writing beam is thereby coupled into the layer with maximum efficiency, and the reading beam is thereby coupled into the layer with minimum efficiency.

From the foregoing description, it should be apparent that the present invention provides an improved information recording medium having a special nitrated dye recording layer. Information can be recorded in the medium by scanning the recording layer with an intensity-modulated beam of light, to selectively heat portions of the layer and thereby cause minute explosions in it, yielding a sequence of spaced microscopic pits representative of the information. The exploded material contains primarily non-ondensable gases so that very little, if any, non-gaseous residue is deposited on an objective lens used to focus the beam onto the medium or on surrounding portions of the medium. The information is thereby recorded with an improved signal-tonoise ratio.

## Claims

1. A recording medium for use in a recording apparatus, wherein a writing beam of light having a prescribed intensity that varies in accordance with an information signal to be recorded is directed at the medium as the medium is moved with respect thereto, said medium comprising: a substrate having a smooth upper surface and a thin recording layer overlying the upper surface of the substrate; wherein as the medium is moved with respect to the intensity-modulated writing beam, the recording layer is selectively energized by the beam to induce spaced explosons therein, whereby corresponding pits representative of the information signal are formed in the recording layer, which includes a nitrated azo dye material, characterized in that the nitrated dye material has a sufficient nitrate content such that substantially all of the products of the explosions are non condensing gasses.

2. A recording medium as defined in Claim 1 wherein: the beain of light has a prescribed wavelength; and the azo dye has a melting point below about 270° C and is relatively highly absorptive of the beam of light.

3. A recording medium as defined in Claim 1, wherein the azo dye is AMAPLAST-SCARLET MM. (trademark of American Color and Chemical Co.)

4. A recording medium as defined in Claim 1 wherein the nitrated dye material is a polymer.

5. A recording medium as defined in Claim 1 wherein the light-absorbing coating further includes a dye material.

6. A method for producing a recording medium according to Claim 1 for use in an optical recording apparatus of a type that directs onto the medium a writing beam of light that is modulated in intensity in accordance with information to be recorded, to produce a sequence of spaced indicia representative of the information, the method including steps of: providing a substrate having a smooth, planer upper surface; nitrating a prescribed amount of azo dye material to produce a nitrated dye material; dissolving the nitrated dye material in a solvent; to produce a solution having a prescribed viscosity; dispensing the solution onto the upper surface of the substrate; and spinning the substrate at a prescribed angular velocity, to evaporate the solvent and yield a thin, uniform nitrated dye recording layer on the upper surface of the substrate.

7. A method as defined in Claim 6, wherein: the step of nitrating includes a preliminary step of dissolving the dye material in an alcohol, to produce a dye slurry.

8. A method as defined in Claim 7, wherein the step of nitrating further includes steps of: preparing an acid solution of nitric acid and sulphuric acid; mixing together the acid solution and the dye slurry, to form an acid slurry mixture; cooling the mixture to prevent localized overheating caused by a chemical reaction between the acid solution and the dye slurry; quenching the chemical reaction by adding water to the mixture, thereby precipitating the nitrated dye; and purifying the precipitated nitrated dye.

9. A method as defined in Claim 6, wherein the nitrated dye produced in the step of nitrating is a polymer, thereby facilitating the formation of a thin, uniform recording layer in the step of spinning.

10. A recording medium as defined in Claim 1, wherein said surface of said substrate is reflective.

11. A method as defined in Claim 6, and further including the step of providing a substrate having a reflective upper surface.

## Patentansprüche

1. Aufzeichnungsmedium zur Verwendung in einem Aufzeichnungsgerät, in welchem ein eine vorgeschriebene, nach Maßgabe eines aufzuzeichnenden Informationssignals variierende Intensität aufweisender Schreiblichtstrahl auf das Medium gerichtet ist, wenn das Medium gegenüber dem Strahl bewegt wird, wobei das Medium ein Substrat umfaßt, das eine glatte oberfläche besitzt, auf die eine dünne Aufzeichnungsschicht aufgebracht ist, und wobei der Aufzeichnungsschicht, wenn das Medium gegenüber dem intensitätsmodulierten Schreibstrahl bewegt wird, von dem Strahl selektiv Energie zugeführt wird, um in ihr in Abständen Explosionen auszulösen, durch die entsprechende, für das Informationssignal charakteristische Vertiefungen in der Aufzeichnungsschicht hervorgerufen werden, welche einen nitrierten Azofarbstoff enthält, dadurch gekennzeichnet, daß der nitrierte Farbstoff einen so hohen Nitratanteil aufweist, daß praktisch alle Explosionsprodukte nichtkondensierende Gase sind.

2. Aufzeichnungsmedium nach Anspruch 1, dadurch gekennzeichnet, daß der Lichtstrahl eine vorgeschriebene Wellenlänge hat und daß der Azofarbstoff einen unter etwa 270° C liegenden Schmelzpunkt besitzt und den Lichtstrahl verhältnismäßig stark absorbiert.

3. Aufzeichnungsmedium nach Anspruch 1, dadurch gekennzeichnet, daß es sich bei dem Azofarbstoff uni AMAPLAST-SCARLET MM (Warenzeichen der American Color and Chemical Co.) handelt.

4. Aufzeichnungsmedium nach Anspruch 1, dadurch gekennzeichnet, daß es sich bei dem nitrierten Farbstoff um ein Polymer handelt.

5. Aufzeichnungsmedium nach Anspruch 1, dadurch gekennzeichnet, daß die lichtabsorbierende Schicht außerdem einen Farbstoff enthält.

6. Verfahren zum Herstellen eines Aufzeichnungsmediums gemäß Anspruch 1 zur Verwendung in einem optischen Aufzeichnungsgerät, bei dem auf das Medium ein Schreiblichtstrahl gerichtet wird, der nach Maßgabe von aufzuzeichnenden Informationen intensitätsmoduliert ist, um eine Folge von in gegenseitigem Abstand angeordneten Marken zu erzeugen, die für die Information charakteristisch sind, gekennzeichnet durch folgende Verfahrensschritte: Bereitstellen eines Substrats mit glatter, ebener Obeiseite, Nitrieren einer vorgeschriebenen Menge Azofarbstoff zur Gewinnung eines nitrierten Farbstoffs, Lösen des nitrierten Farbstoffs in einem Lösungsmittel zum Herstellen einer Lösung mit vorgeschriebener Viskosität, Aufbringen der Lösung auf die Oberseite des Substrats und Rotierenlassen des Substrats mit vorgeschriebener Winkelgeschwindigkeit, damit das Lösungsmittels verdunstet und sich auf der Obeiseite des Substrats eine dünne, gleichförmige Aufzeichnungsschicht mit nitriertem Farbstoff ergibt.

7. Verfahren nach Anspruch 6, dadurch gekennnzeichnet, daß dem Nitrieren ein vorbereitender Schritt vorausgeht, bei dem der Farbstoff in einem Alkohol gelost wird, um einen Farbstoffbrei herzustellen.

8. Verfahren nach Anspruch 7, dadurch gekennzeichnet, daß zu dem Nitrierschritt noch folgende Verfahrensschritte gehören: Herstellen einer sauren Lösung von Salpetersäure und Schwefelsäure, Vermischen der sauren Lösung und des Farbstoffbreies zum Bilden eines Säure-Brei-Gemischs, Kühlen des Gemischs zum Verhindern von auf eine chemische Reaktion zwischen der sauren Lösung und dem Farbbrei zurückzuführender örtlicher Überhitzung, Abbrechen der chemischen Reaktion durch Einleiten von Wasser in das Gemisch, wodurch der nitrierte Farbstoff ausfällt, und Reinigen des ausgefällten nitrierten Farbstoffs.

9. Verfahren nach Anspruch 6, <u>dadurch gekennzeichnet</u>, daß es sich bei dem in dem Nitrierschritt gebilden nitriten Farbstoff um ein polymer handelt,wodurch die Bildung einer dünnen, gleichmäßigen Aufzeichnungsschicht bei den Rotieren erleichtert wird.

10. Aufzeichnungsmedium nach Anspruch 1, <u>dadurch gekennzeichnet</u>, daß die oberseite des Substrats reflektiert.

11. Verfahren nach Anspruch 6, <u>dadurch gekennzeichnet</u>, daß außerdem ein Substrat mit reflektierender oberseite bereitgestellt wird.

**Revendications**

1. Milieu d'enregistrement pour une utilisation dans un appareil d'enregistrement, où un faisceau d'écriture de lumière ayant une intensité prescrite qui varie selon un signal d'information à enregistrer est dirigé au milieu lorsque le milieu est déplacé par rapport à celui-ci, ledit milieu comprenant: un substrat ayant une surface supérieure lisse et une fine couche d'enregistrement recouvrant le surface supérieure du substrat; où, lorsque le milieu est déplacé par rapport au faisceau d'écriture modulé en intensité, la couche d'enregistrement est sélectivement excitée par le faisceau pour induire dans celle-ci des explosions espacées, ainsi des trous correspondants représentatifs du signal d'information sont formés dans la couche d'enregistrement qui comprend un matériau colorant azo nitré, caractérisé en ce que le matériau colorant nitré a une quantité suffisante de nitrate telle que sensiblement tous les produits des explosions sont des gaz non de condensation.

2. Milieu d'enregistrement selon la revendication 1, où le faisceau de lumière a une longueur d'onde prescrite; et le colorant azo a un point de fusion en dessous d'environ 270°C et absorbe relativement hautement le faisceau de lumière.

3. Milieu d'enregistrement selon la revendication 1, où le colorant azo est AMAPLAST-SCARLET MM. (marque déposée de American Color and Chemical Co.).

4. Milieu d'enregistrement selon la revendication 1, où le matériau colorant nitré est un polymère.

5. Milieu d'enregistrement selon la revendication 1, où la couche absorbante de lumière comprend en outre un matériau colorant.

6. Procédé de production d'un milieu d'enregistrement selon la revendication 1 pour utilisation dans un appareil d'enregistrement optique d'un type qui dirige sur le milieu un faisceau d'écriture de lumière qui est modulé en intensité selon l'information enregistrée, pour produire une séquence d'indices espacés représentatifs de l'information, le procédé comprenant les étapes de: produire un substrat ayant une surface supérieure plane lisse; nitrer une quantité prescrite de matériau colorant azo pour produire un matériau colorant nitré; dissoudre le matériau colorant nitré dans un solvant; produire une solution ayant une viscosité prescrite; répandre la solution sur la surface supérieure du substrat; et entraîner le substrat à une vitesse angulaire prescrite pour évaporer le solvant et produire une couche d'enregistrement à colorant nitré fine et uni forme sur la surface supérieure du substrat.

7. Procédé selon la revendication 6, où l'étape de nitration comprend une étape préliminaire de dissoudre le matériau colorant dans un alcool pour produire une boue de colorant.

8. Procédé selon la revendication 7, où l'étape de nitration comprend en outre les étapes de: préparer une solution acide d'acide nitrique et d'acide sulfurique; mélanger ensemble la solution d'acide et la boue de colorant pour former un mélange de bouse acide; refrodir le mélange pour empêcher un surchauffage localisé provoqué par la réaction chimique entre la solution d'acide et la boue de colorant; arrêter la réaction chimique en ajoutant de l'eau au mélange précidant ainsi le colorant nitré; et putifier le colorant nitré précipité.

9. Procédé selon la revendication 6, où le colorant nitré produit dans l'étape de nitration est un polymère, facilitant ainsi la formation d'une couche d'enregistrement fine et uniforme dans l'étape d'entraînement en rotation.

10. Milieu d'enregistrement selon la revendication 1, où la surface précitée du substrat précité est réflective.

11. Procédé selon la revendication 6, et comprenant de plus l'étape de produire un substrat ayant une surface supérieure réflective.

*Fig.1*

*Fig.2*

*Fig.3*